# EUROPEAN PATENT SPECIFICATION

(11) **EP 1 712 578 B1**
(45) Date of publication and mention of the grant of the patent: **06.05.2009**
(21) Application number: 06006995.2
(22) Date of filing: 31.03.2006
(51) Int. Cl.: C08G 18/40, C08G 18/36

(54) **Polyurethane foams made with vegetable oil hydroxylate, polymer polyol and aliphatic polyhydroxy alcohol**
Aus Pflanzenölhydroxylaten, Polymerpolyolen und aliphatischen Polyhydroxyalkoholen hergestellte Polyurethanschäume
Mousses de polyuréthane à base d'huile végétale hydroxylée, de polyol polymère et d'alcool aliphatique polyhydroxy

(30) Priority: 13.04.2005 US 105138
(43) Date of publication of application: 18.10.2006
(73) Proprietor: Bayer MaterialScience LLC, Pittsburgh, PA 15205 (US)
(72) Inventor: Kaushiva, Bryan D., Baltimore, MD 21231 (US); Moore, Micah N., Red House WV 25168 (US)
(74) Representative: Perchenek, Nils

(56) References cited:
- DE-A1- 19 811 472
- US-B1- 6 734 217

## Description

### FIELD OF THE INVENTION

The present invention relates, in general, to polyurethanes, and more specifically, to polyurethane foams made with a polyol component containing a vegetable oil hydroxylate, a polymer polyol (PMPO) and optionally an aliphatic polyhydroxy alcohol.

### BACKGROUND OF THE INVENTION

Polyurethane foams have found extensive use in a multitude of industrial and consumer applications. This popularity is due to the wide ranging mechanical properties of polyurethane combined with its ability to be relatively easily manufactured. Automobiles, for example, contain numerous polyurethane components, such as seats, dashboards and other cabin interior parts. Polyurethane foams have traditionally been categorized as being flexible, semirigid or rigid; with flexible foams generally being softer, less dense, more pliable and more subject to structural rebound subsequent to loading than are rigid foams.

The production of polyurethane foams is well known to those skilled in the art. Polyurethanes are formed from the reaction of NCO groups with hydroxyl groups. The most common method of polyurethane production is via the reaction of a polyol and a polyisocyanate which forms the backbone urethane group. Cross-linking agents, blowing agents, flame retardants, catalysts and other additives may also be included in the polyurethane formulation as needed. Most flexible polyurethane foams formulations contain water as an isocyanate reactive component to chemically form carbon dioxide as a blowing agent and an amine moiety which reacts further with the polyisocyanate to form urea backbone groups. These urethane-urea polymers are also included under the broad definition of polyurethanes.

Polyols used in the production of polyurethanes are typically petrochemical in origin, being generally derived from propylene oxide, ethylene oxide and various starters such as propylene glycol, glycerin, sucrose and sorbitol. Polyester polyols and polyether polyols are the most common polyols used in polyurethane production. For flexible foams, polyester or polyether polyols with molecular weights of from about 2,000 to 10,000 are generally used, whereas for rigid and semirigid foams, shorter chain polyols with molecular weights of from about 400 to 2,000 are typically used. Polyester and polyether polyols can be selected to allow the engineering of a particular polyurethane foam having desired final toughness, durability, density, flexibility, compression ratios and modulus and hardness qualities. Generally, higher molecular weight polyols and lower functionality polyols tend to produce more flexible foams than do lower molecular weight polyols and higher functionality polyols.

"Polymer Polyols" are a special class of polyols useful in the preparation of polyurethane foams with increased load bearing capacity. These polyols are stable dispersions of reinforcing solid particles in the polyol liquid. The three most common commercial forms of polymer polyols are the SAN, PHD and PIPA types.

Low molecular weight cross-linking agents are often used in the production of polyurethane foams. The most widely used cross-linking agents are the alkanolamines such as diethanolamine.

Petroleum-derived components such as polyester and polyether polyols pose several disadvantages. Use of such polyester or polyether polyols contributes to the depletion of petroleum-derived oil, which is a non-renewable resource. Also, the production of a polyol requires the investment of a great deal of energy because the oil needed to make the polyol must be drilled, extracted and transported to a refinery where it is refined and processed to purified hydrocarbons that are subsequently converted to alkoxides and finally to the finished polyols. As the consuming public becomes increasingly aware of the environmental impact of this production chain, consumer demand for "greener" products will continue to grow. To help reduce the depletion of petroleum-derived oil whilst satisfying this increasing consumer demand, it would be advantageous to partially or wholly replace petroleum-derived polyester or polyether polyols used in the production of polyurethane foams with renewable and more environmentally responsible components.

Attempts have been made by workers in the art to accomplish the replacement of petroleum-derived polyols with components derived from renewable resources. Plastics and foams made using fatty acid triglycerides derived from vegetable oils, including soybean derivatives, have been developed. As a renewable, versatile, and environmentally-friendly resource, soybeans have been, and will continue to be, desirable as ingredients for plastics manufacture.

Kurth, in a number of patents including U.S. Pat. Nos. 6,180,686; 6,465,569; and 6,624,244, teaches the use of unmodified (oxidized) soybean oil as a polyol in the production of polyurethane materials. The oil is blown with air to oxidize it, but no other modification is taught before use of this oxidized soybean oil as a substitute for petroleum-based polyols.

The use of crosslinking agents in the preparation of foams is well known to those skilled in the art. See for example the Polyurethane Handbook, Gunter Oertel, Hanser Plublishers, 1985 and Muller et. al. in U.S. Pat. No. 4,288,566. However, it is well known that most crosslinking agents result in decreased tear and elongation properties of foams made with standard petroleum-derived polyols and polymer polyols. The use of aliphatic polyhydroxy alcohol crosslinking agents with polyols derived from renewable resource polyols and in the presence of polymer polyols is nowhere discussed in the art

Most cross-linking agents used in the production of polyurethane foams are also derived from petroleum. Many aliphatic polyhydroxy alcohol cross-linking agents can be produced from renewable resources which would offer further environmental benefits.

The art is silent as to the use of polymer polyols and aliphatic polyhydroxy alcohols in vegetable oil containing polyurethane formulations. A need continues to exist in the art for polyurethane foams containing bio-based polyols and cross-linkers such as those based on vegetable oils.

### SUMMARY OF THE INVENTION

Accordingly, the present invention provides polyurethane foams made from a polyol component containing a polymer polyol (PMPO), at least 25 wt.%, based on the weight of the polyol component, of a vegetable oil hydroxylate and from 0 to 3 wt.%, based on the weight of the polyol component, of an aliphatic polyhydroxy alcohol having a functionality of about 3 to about 8 and a molecular weight of less than about 350.

The vegetable oil hydroxylates, and optionally, the aliphatic polyhydroxy alcohols are environmentally friendly "bio-based" polyols. The inclusion of a polymer polyol (PMPO) in the inventive polyol component increases the tear resistance, tensile strength and unexpectedly the elongation of the resulting foams. The aliphatic polyhydroxy alcohol in the inventive polyol component has been found to increase the hot tear resistance of the resulting foams immediately after the foaming process.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a polyurethane foam containing the reaction product of at least one polyisocyanate with a polyol component containing a polymer polyol (PMPO), at least 25 wt.%, based on the weight of the polyol component, of a vegetable oil hydroxylate and from 0 to 3 wt.%, based on the weight of the polyol component, of an aliphatic polyhydroxy alcohol having a functionality of from 3 to 8 and a molecular weight of less than 350, optionally, a non-vegetable oil based polyol, optionally in the presence of at least one of blowing agents, surfactants, other cross-linking agents, extending agents, pigments, flame retardants, catalysts and fillers.

The present invention further provides a process for producing a polyurethane foam involving reacting at least one polyisocyanate with a polyol component containing a polymer polyol (PMPO), at least 25 wt.%, based on the weight of the polyol component, of a vegetable oil hydroxylate and from 0 to 3 wt.%, based on the weight of the polyol component, of an aliphatic polyhydroxy alcohol having a functionality of from 3 to 8 and a molecular weight of less than 350, optionally, a non-vegetable oil based polyol, optionally in the presence of at least one of blowing agents, surfactants, other cross-linking agents, extending agents, pigments, flame retardants, catalysts and fillers.

It is surprising that the combination of a vegetable oil hydroxylate, a polymer polyol (PMPO) and an aliphatic polyhydroxy alcohol would result in foams with improved processing due to improved hot tear strength properties while retaining good strength in the cured foams.

Suitable polyisocyanates are known to those skilled in the art and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula

Q(NCO)ₙ

in which n is a number from 2-5, preferably 2-3, and Q is an aliphatic hydrocarbon group; a cycloaliphatic hydrocarbon group; an araliphatic hydrocarbon group; or an aromatic hydrocarbon group.

Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and -1,4-diisocyanate, and mixtures of these isomers; 1-isocyanato-3,3,5-trimethyl-5-isocyanatomethylcyclohexane (isophorone diisocyanate;. German Auslegeschrift 1,202,785 and U.S. Pat. No. 3,401,190); 2,4- and 2,6-hexahydrotoluene diisocyanate and mixtures of these isomers; dicyclohexylmethane-4,4'-diisocyanate (hydrogenated MDI, or HMDI); 1,3- and 1,4-phenylene diisocyanate; 2,4- and 2,6-toluene diisocyanate and mixtures of these isomers (TDI); diphenylmethane-2,4'- and/or -4,4'-diisocyanate (MDI); polymeric diphenylmethane diisocyanate (PMDI), naphthylene-1,5-diisocyanate; triphenylmethane-4,4',4"-triisocyanate; polyphenyl-polymethylene-polyisocyanates of the type which may be obtained by condensing aniline with formaldehyde, followed by phosgenation (crude MDI), which are described, for example, in GB 878,430 and GB 848,671; norbornane diisocyanates, such as described in U.S. Pat. No. 3,492,330; m- and p-isocyanatophenyl sulfonylisocyanates of the type described in U.S. Pat. No. 3,454,606; perchlorinated aryl polyisocyanates of the type described, for example, in U.S. Pat. No. 3,227,138; modified polyisocyanates containing carbodiimide groups of the type described in U.S. Pat. No. 3,152,162; modified polyisocyanates containing urethane groups of the type described, for example, in U.S. Pat. Nos. 3,394,164 and 3,644,457; modified polyisocyanates containing allophanate groups of the type described, for example, in GB 994,890, BE 761,616, and NL 7,102,524; modified polyisocyanates containing isocyanurate groups of the type described, for example, in U.S. Pat. No. 3,002,973, German Patentschriften 1,022,789, 1,222,067 and 1,027,394, and German Offenlegungsschriften 1,919,034 and 2,004,048; modified polyisocyanates containing urea groups of the type described in German Patentschrift 1,230,778; polyisocyanates containing biuret groups of the type described, for example, in German Patentschrift 1,101,394, U.S. Pat. Nos. 3,124,605 and 3,201,372, and in GB 889,050; polyisocyanates obtained by telomerization reactions of the type described, for example, in U.S. Pat. No. 3,654,106; polyisocyanates containing ester groups of the type described, for example, in GB 965,474 and GB 1,072,956, in U.S. Pat. No. 3,567,763, and in German Patentschrift 1,231,688; reaction products of the above-mentioned isocyanates with acetals as described in German Patentschrift 1,072,385; and polyisocyanates containing polymeric fatty acid groups of the type described in U.S. Pat. No. 3,455,883. It is also possible to use the isocyanate-containing distillation residues accumulating in the production of isocyanates on a commercial scale, optionally in solution in one or more of the polyisocyanates mentioned above. Those skilled in the art will recognize that it is also possible to use mixtures of the polyisocyanates described above. Particularly preferred in the polyurethane foams of the present invention is polymeric diphenylmethane diisocyanate (PMDI).

Prepolymers may also be employed in the preparation of the inventive foams. Prepolymers may be prepared by reacting an excess of organic polyisocyanate or mixtures thereof with a minor amount of an active hydrogencontaining compound as determined by the well-known Zerewitinoff test, as described by Kohler in Journal of the American Chemical Society, 49, 3181 (1927). These compounds and their methods of preparation are known to those skilled in the art. The use of any one specific active hydrogen compound is not critical; any such compound can be employed in the practice of the present invention.

The vegetable oil hydroxylate replaces at least a portion of the petroleum-derived polyol that would typically be used in producing polyurethane foams. The preferred vegetable oil used to produce the vegetable oil hydroxylate is soybean oil, although the inventors contemplate that virtually any other vegetable oil, such as sunflower, canola, linseed, cottonseed, tung, palm, poppy seed, corn and peanut oil may be hydroxylated and used in accordance with the present invention.

By hydroxylated, the inventors herein mean the introduction and/or increase in the number of hydroxyl (i.e., OH) groups in the molecule. In the present invention, the vegetable oil may be hydroxylated by any method in the art, including but not limited to, air oxidation, the use of peroxides and by hydroformylation. Such hydroxylated vegetable oils are commercially available from a number of suppliers.

The vegetable oil hydroxylates useful in the present invention make up at least 25 wt.% of the polyol component and have a nominal average functionality in the range of 1.5 to 6, more preferably 2 to 4 and a molecular weight in the range of 300 to 10,000, more preferably from 500 to 7,000 Da. The vegetable oil hydroxylates useful in the present invention may have a functionality and molecular weight ranging between any combination of these values, inclusive of the recited values.

As those skilled in the art are aware, polymer polyols (PMPOs) are dispersions of polymer solids in a polyol. Addition of higher levels of polymer polyol particles to foam formulations typically leads to reduced foam elongation and slightly enhanced tensile and tear strength. It is therefore very surprising that incorporating a small amount of polymer polyol into the foam increases the hot tear strength and consequently, the overall foam processing characteristics, while significantly improving the tear strength of the cured foam and without significantly diminishing the elongation. Any polymer (or dispersion) polyol known in the art may be included in the polyol component of the present invention. Those polymer polyols preferred for use in the present invention include the "SAN" polymer polyols as well as the "PHD" dispersion polyols and the "PIPA" dispersion polyols. Although historically polymer polyols referred to just the SAN type, as used herein polymer polyols is meant to refer to all three types of polymer/dispersion polyols.

SAN polymer polyols are typically prepared by the *in situ* polymerization of one or more vinyl monomers, preferably acrylonitrile and styrene, in a polyol, preferably, a polyether polyol, having a minor amount of natural or induced unsaturation. Methods for preparing SAN polymer polyols are described in, for example, U.S. Pat. Nos. 3,304,273; 3,383,351; 3,523,093; 3,652,639, 3,823,201; 4,104,236; 4,111,865; 4,119,586; 4,125,505; 4,148,840 and 4,172,825; 4,524,157; 4,690,956; RE-28,715; and RE-29,118.

SAN polymer polyols useful in the present invention preferably have a polymer solids content within the range of from 1 to 60 wt.%, more preferably, from 4 to 50 wt.%, based on the total weight of the SAN polymer polyol. As mentioned above, SAN polymer polyols are typically prepared by the *in situ* polymerization of a mixture of acrylonitrile and styrene in a polyol. Where used, the ratio of styrene to acrylonitrile polymerized *in situ* in the polyol is preferably in the range of from 0:100 to 80:20 parts by weight, based on the total weight of the styrene/acrylonitrile mixture. SAN polymer polyols useful in the present invention preferably have hydroxyl values within the range of from 10 to 200-, more preferably from 20 to 60.

As indicated, the polymer polyols may be prepared with other vinyl monomers either in addition to or instead of styrene and/or acrylonitrile. Preferred vinyl comonomers include halogenated compounds such as bromostyrenes and vinylidene chloride.

Polyols used to prepare the SAN polymer polyols employed in the present invention have average nominal functionalites between 2 and 8 and are based on propylene oxide, or mixtures of propylene oxide and ethylene oxide. Alkoxylation of the starter can be accomplished by using alone or in sequence either propylene oxide; ethylene oxide or a mixture of propylene oxide and ethylene oxide to form mixed block co-polymers. A preferred polyol is formed by adding propylene oxide followed by ethylene oxide to form an ethylene oxide-capped polyol.

PHD polymer polyols are typically prepared by the *in situ* polymerization of an isocyanate mixture with a diamine and/or hydrazine in a polyol, preferably, a polyether polyol. Methods for preparing PHD polymer polyols are described in, for example, U.S. Pat. Nos. 4,089,835 and 4,260,530. PIPA polymer polyols are typically prepared by the *in situ* polymerization of an isocyanate mixture with a glycol and/or glycol amine in a polyol, preferably a polyether polyol. PHD and PIPA polymer polyols useful in the present invention preferably have a polymer solids content within the range of from 1 to 30 wt.%, preferably, from 10 to 25 wt.%, based on the total weight of the PHD or PIPA polymer polyol.

PHD and PIPA polymer polyols utilized in the present invention preferably have hydroxyl values within the range of from 15 to 80, more preferably, from 25 to 60. Polyols used to prepare the PHD and PIPA polymer polyols preferred in the present invention are triols based on propylene oxide, ethylene oxide or mixtures thereof. Alkoxylation of the starter is preferably accomplished with propylene oxide, followed by capping with ethylene oxide.

Isocyanate reactive cross-linkers and/or extenders ("modifiers") are known by those skilled in the art to be added to polyurethane formulations to improve processing or to affect the physical properties of the resultant articles. Such modifiers typically are glycols or glycol amines having a molecular weight of less than 350 Da and having functionalities between 2 and 8.

The preferred cross-linkers in the current invention are aliphatic polyhydroxy alcohols having a functionality of from 3 to 8 and a molecular weight of less than 350. Examples of such crosslinking additives include glycerin, trimethylolpropane, trimethylolethane, pentaerythritol, alkylglucosides, sorbitol, mannitol, fructose, glucose, hydroxyethylglucoside, sucrose and hydroxypropyl glucoside. Particularly preferred aliphatic polyhydroxy alcohols are derived from renewable resources. Glycerin is the most preferred aliphatic polyhydroxy crosslinking agent. The aliphatic polyhydroxy cross-linkers may be included as formulation additives or they may be included in the polyol component which also may optionally include one or more non-vegetable oil-based polyols. The aliphatic polyhydroxy cross-linkers are preferably included in the inventive polyurethane foam forming formulation in an amount of from 0 to 3 wt.%, based on the weight of the polyol component, more preferably, from 0.1 to 3 wt.%.

Non-vegetable oil-based (i.e., petrochemically derived) polyols include, but are not limited to, polyethers, polyesters, polyacetals, polycarbonates, polyesterethers, polyester carbonates, polythioethers, polyamides, polyesteramides, polysiloxanes, polybutadienes and polyacetones. The optional non-vegetable oil-based polyol may be made via the standard base catalyzed alkoxylation that is well known in the art or alternatively by alkoxylation using double metal cyanide (DMC) catalysts. Preferably, double metal cyanide complex catalysts such as those disclosed in U.S. Pat. Nos. 5,158,922 and 5,470,813 are used.

Suitable additives optionally included in the polyurethane forming formulations of the present invention include, for example, stabilizers, catalysts, cell regulators, reaction inhibitors, plasticizers, fillers, crosslinking or extending agents other than aliphatic polyhydroxy alcohols, blowing agents, etc.

Stabilizers which may be considered suitable for the inventive foam forming process include, for example, polyether siloxanes, and preferably those which are insoluble in water. Compounds such as these are generally of such a structure that a relatively short chain copolymer of ethylene oxide and propylene oxide is attached to a polydimethylsiloxane residue. Such stabilizers are described in, for example, U.S. Pat. Nos. 2,834,748, 2,917,480 and 3,629,308.

Catalysts suitable for the foam forming process of the present invention include those which are known in the art. These catalysts include, for example, tertiary amines, such as triethylamine, tributylamine, N-methylmorpholine, N-ethylmorpholine, N,N,N',N'-tetramethylethylenediamine, pentamethyl-diethylenetriamine and higher homologues (as described in, for example, DE-A 2,624,527 and 2,624,528), 1,4-diazabicyclo(2.2.2)octane, N-methyl-N'-dimethylaminoethylpiperazine, bis-(dimethylaminoalkyl)piperazines, N,N-dimethylbenzylamine, N,N-dimethylcyclohexylamine, N,N-diethyl-benzylamine, bis-(N,N-diethylaminoethyl) adipate, N,N,N',N.'-tetramethyl-1,3-butanediamine, N,N-dimethyl-β-phenylethylamine, 1,2-dimethylimidazole, 2-methylimidazole, monocyclic and bicyclic amines together with bis-(dialkylamino)alkyl ethers, such as 2,2-bis-(dimethylaminoethyl) ether.

Other suitable catalysts which may be used in producing the inventive polyurethane foams include, for example, organometallic compounds, and particularly, organotin compounds. Organotin compounds which may be considered suitable include those organotin compounds containing sulfur. Such catalysts include, for example, di-n-octyltin mercaptide. Other types of suitable organotin catalysts include, preferably tin(II) salts of carboxylic acids such as, for example, tin(II) acetate, tin(II) octoate, tin(II) ethylhexoate and/or tin(II) laurate, and tin(IV) compounds such as, for example, dibutyltin oxide, dibutyltin dichloride, dibutyltin diacetate, dibutyltin dilaurate, dibutyltin maleate and/or dioctyltin diacetate.

Water is preferably used as the sole blowing agent in the present invention, although auxiliary blowing agents, such as, for example, carbon dioxide, can be used. Water functions as the blowing by reacting with the isocyanate component to chemically form carbon dioxide gas plus an amine moiety which reacts further with the polyisocyanate to form urea backbone groups. Water can be used in an amount up to 10% by weight. Preferably, 1 to 8% by weight, more preferably, 1 to 4% by weight, based on the total weight of the isocyanate-reactive mixture, of water is used in the present invention.

Further examples of suitable additives, which may optionally be included in the flexible polyurethane foams of the present invention can be found in Kunststoff-Handbuch, volume Vll, edited by Vieweg & Hochtlen, Carl Hanser Verlag, Munich 1993, 3rd Ed., pp. 104 to 127, for example. The relevant details concerning the use and mode of action of these additives are set forth therein.

### EXAMPLES

The present invention is further illustrated, but is not to be limited, by the following examples. All quantities given in "parts" and "percents" are understood to be by weight, unless otherwise indicated. Foams were made using the following components:
- Polyol A: a polyether polyol having a hydroxyl number of about 28, prepared by KOH-catalyzed alkoxylation of sorbitol with a block of propylene oxide (84.5 wt.% of the total oxide), followed by a block of ethylene oxide (15.5 wt.% of the total oxide);
- Polyol B: a bio-based diol having a hydroxyl number of 54, available as SOYOYL R2-052 from Urethane Soy Systems;
- Polyol C: a 41 wt.% solids polymer polyol having a hydroxyl number of about 18.5, in which the solids are a (64%) styrene (36%) acrylonitrile mixture polymerized *in situ* in a base polyol having a hydroxyl number of about 32 prepared by KOH-catalyzed alkoxylation of a mixture of glycerin (72%) and sorbitol (28%) with a block of propylene oxide (80.7 wt.% of the total oxide) followed by a block of ethylene oxide (19.3 wt.% of the total oxide);
- Polyol D: a polyether polyol having a hydroxyl number of about 37.0, prepared by KOH-catalyzed alkoxylation of glycerin with a block of propylene oxide (4.9 wt.% of the total oxide), followed by a mixed block of propylene oxide (62.7 wt.% of the total oxide) and ethylene oxide (22.4 wt.% of the total oxide), finished with a block of ethylene oxide (10 wt.% of the total oxide);
- Polyol E: a polyether polyol having a hydroxyl number of about 168 prepared by KOH-catalyzed alkoxylation of glycerin with ethylene oxide;
- Polyol F: a polyether polyol having a hydroxyl number of about 36, prepared by KOH-catalyzed alkoxylation of glycerine with a block of propylene oxide (80 wt.% of the total oxide), followed by a block of ethylene oxide (20 wt.% of the total oxide);
- Surfactant A: a silicone surfactant available as TEGOSTAB B-8715 LF from Goldschmidt AG;
- DEOA LF: diethanolamine containing 15 % water;
- Catalyst A: pentamethyldipropylenetriamine available as POLYCAT 77 from Air Products;
- Catalyst B: delayed action amine catalyst, available as DABCO H-1010 from Air Products;
- Catalyst C: dibutyltin bis(dodecylmercaptide), available as DABCO 120 from Air Products; and
- Isocyanate A: a polymeric diphenylmethane diisocyanate (PMDI) having an NCO group content of about 32.4, a functionality of about 2.3 and a viscosity of about 25 mPa•s at 25°C.

The components were combined in the amounts given below in parts by weight per hundred parts by weight of polyol (pphp) in Table I and reacted at an isocyanate index (100 A/B) of 90 to produce free rise foams. The hot tear characteristics were observed immediately after demold and such assessments were strictly qualitative.

**Table I**

| | **C-1*** | **2** | **3** | **4*** |
|---|---|---|---|---|
| Polyol A | 60.00 | 53.00 | 53.00 | 60.00 |
| Polyol B | 40.00 | 40.00 | 40.00 | 40.00 |
| Polyol C | - | 7.00 | 7.00 | - |
| Polyol D | 1.00 | 1.00 | 1.00 | 1.00 |
| Polyol E | - | - | 2.00 | - |
| Polyol F | - | - | - | - |
| Water | 2.20 | 2.25 | 2.25 | 2.25 |
| Surfactant A | 0.30 | 0.30 | 0.30 | 0.30 |
| DEOA LF | 0.35 | - | - | - |
| Mineral Oil | - | - | - | - |
| Glycerine | - | 0.30 | 0.30 | 0.30 |
| Catalyst A | 1.00 | 1.00 | 1.00 | 1.00 |
| Catalyst B | 0.90 | 0.90 | 0.90 | 0.90 |
| Catalyst C | - | - | - | - |
| Isocyanate A | 44,06 | 44.04 | 44.74 | 44.18 |
| | | | | |
| Hot tear observation | poor | good | good | good |

| | | | | |
|---|---|---|---|---|
| *Comparative | | | | |

The components given below (pphp) in Table II were combined and reacted at an isocyanate index (100 A/B) of 90 to produce molded foams. (Examples 10 and 11 were at an isocyanate index of 80 and 100, respectively.) The hot tear characteristics as observed immediately after foaming are summarized below in Table II.

As can be appreciated by reference to Table I, the hot tear characteristics appeared to be improved in free rise foams made with those formulations containing glycerin. As can be appreciated by reference to Table II below, the hot tear strength of molded foams is enhanced by the inclusion of polymer polyol and further improved by the inclusion of glycerin.

The effects of using glycerin, sucrose or sorbitol with polymer polyol were examined in Examples 16-22. The components given (pphp) in Table III below were combined and reacted at an isocyanate index (100 A/B) of 90 to produce foams. Physical measurements made of the resultant, fully cured, foams are presented below in Table III along with hot tear observations.

**Table II**

| | **C-5*** | **6** | **7** | **8** | **9** | **10** | **11** | **12*** | **13*** | **14*** |
|---|---|---|---|---|---|---|---|---|---|---|
| Polyol A | 60.00 | 53.00 | 53.00 | 53.00 | 53.00 | 53.00 | 53.00 | 60.00 | 60.00 | - |
| Polyol B | 40.00 | 40.00 | 40.00 | 40.00 | 40.00 | 40.00 | 40.00 | 40.00 | 40.00 | 40.00 |
| Polyol C | - | 7.00 | 7.00 | 7.00 | 7.00 | 7.00 | 7.00 | - | - | - |
| Polyol D | 1.00 | 1.00 | 1.00 | 1.00 | 1.00 | 1.00 | 1.00 | 1.00 | 1.00 | 1.00 |
| Polyol E | - | - | - | - | - | - | - | - | - | 7.00 |
| Polyol F | - | - | - | - | - | - | - | - | - | 60.00 |
| Water | 2.20 | 2.20 | 2.20 | 2.25 | 2.25 | 2.25 | 2.25 | 2.20 | 2.25 | 2.20 |
| Surfactant A | 0.30 | 0.30 | 0.30 | 0.30 | 0.30 | 0.30 | 0.30 | 0.30 | 0.30 | 0.30 |
| DEOA LF | 0.35 | 0.35 | 0.35 | - | - | - | - | 0.35 | - | 0.35 |
| Mineral Oil | - | - | - | - | - | - | - | 2.00 | - | - |
| Glycerin | - | - | - | 0.30 | 0.30 | 0.30 | 0.30 | - | 0.30 | |
| Catalyst A | 1.00 | 1.00 | 1.00 | 1.00 | 1.00 | 1.00 | 1.00 | 1.00 | 1.00 | 1.00 |
| Catalyst B | 0.90 | 0.90 | 0.90 | 0.90 | 0.90 | 0.90 | 0.90 | 0.90 | 0.90 | 0.90 |
| Catalyst C | - | - | - | - | - | - | - | - | - | 0.30 |
| Isocyanate A | 44.06 | 43.90 | 43.92 | 44.04 | 44.04 | 39.15 | 48.93 | 44.04 | 44.15 | 47.49 |
| | | | | | | | | | | |
| Hot tear observation | poor | slightly improved | slightly improved | good | good | good | good | coarse cells | good | coarse cells |

| | | | | | | | | | | |
|---|---|---|---|---|---|---|---|---|---|---|
| *Comparative | | | | | | | | | | |

**Table III**

| | **C-15*** | **16** | **17** | **18*** | **19** | **20** | **21*** | **22*** |
|---|---|---|---|---|---|---|---|---|
| Polyol A | 60.00 | 53.00 | 53.00 | 60.00 | 53.00 | 53.00 | 60.00 | 60.00 |
| Polyol B | 40.00 | 40.00 | 40.00 | 40.00 | 40.00 | 40.00 | 40.00 | 40.00 |
| Polyol C | - | 7.00 | 7.00 | - | 7.00 | 7.00 | - | - |
| Polyol D | 1.00 | 1.00 | 1.00 | 1.00 | 1.00 | 1.00 | 1.00 | 1.00 |
| Water | 2.20 | 2.20 | 2.25 | 2.25 | 1.95 | 2.12 | 2.12 | 1.95 |
| Surfactant A | 0.30 | 0.30 | 0.30 | 0.30 | 0.30 | 0.30 | 0.30 | 0.30 |
| DEOA LF | 0.35 | 0.35 | - | - | - | - | - | - |
| Glycerin | - | - | 0.30 | 0.30 | - | - | - | - |
| Sucrose, 50% aqueous | - | - | - | - | 0.60 | - | - | 0.60 |
| Sorbitol, 70% aqueous | - | - | - | - | - | 0.43 | 0.43 | - |
| Catalyst A | 1.00 | 1.00 | 1.00 | 1.00 | 1.00 | 1.00 | 1.00 | 1.00 |
| Catalyst B | 0.90 | 0.90 | 0.90 | 0.90 | 0.90 | 0.90 | 0.90 | 0.90 |
| Isocyanate A | 44.06 | 43.92 | 44.04 | 44.18 | 44.53 | 44.03 | 44.18 | 44.71 |
| | | | | | | | | |
| Density (Ib/ft³) | 4.52 | 4.44 | 4.55 | 4.50 | 4.70 | 4.70 | 4.73 | 4.65 |
| IFD HT | 2.74 | 2.74 | 2.74 | 2.74 | 2.75 | 2.76 | 2.75 | 2.74 |
| IFD 25% (Ib) | 62.77 | 68.30 | 68.15 | 64.82 | 83.70 | 79.30 | 76.13 | 67.72 |
| IFD 50% (Ib) | 105.67 | 116.84 | 115.28 | 108.33 | 133.20 | 128.50 | 123.20 | 108.60 |
| IFD 65% (Ib) | 166.38 | 186.22 | 183.14 | 169.75 | 202.70 | 195.40 | 186.70 | 166.60 |
| IFD 25% Return (Ib) | 48.02 | 50.32 | 51.00 | 49.93 | 62.09 | 59.07 | 58.01 | 52.03 |
| Return value (%) | 76.51 | 73.67 | 74.83 | 77.02 | 74.18 | 74.50 | 76.20 | 76.83 |
| IFD 50/25 | 1.68 | 1.71 | 1.69 | 1.67 | 1.59 | 1.62 | 1.62 | 1.60 |
| IFD 65/25 | 2.65 | 2.73 | 2.69 | 2.62 | 2.42 | 2.46 | 2.45 | 2.46 |
| CFD 50 % (psi) | 0.67 | 0.74 | 0.77 | 0.70 | 0.85 | 0.86 | 0.88 | 0.76 |
| Tensile strength (psi) | 14.16 | 14.59 | 18.41 | 16.47 | 12.23 | 12.93 | 9.85 | 13.33 |
| Elongation (%) | 72.58 | 75.77 | 78.92 | 75.07 | 60.74 | 59.39 | 67.85 | 75.60 |
| Tear Strength (pli) | 0.70 | 1.00 | 0.80 | 0.70 | 0.82 | 0.76 | 0.59 | 0.59 |
| Comp 50% (%) | 14.98 | 17.08 | 16.13 | 13.84 | 14.27 | 13.69 | 12.97 | 14.00 |
| Humid Aged Comp. 50 (%) | 13.72 | 15.89 | 15.17 | 13.06 | 15.13 | 14.83 | 13.01 | 13.83 |
| Wet set 50 (%) | 13.02 | 15.42 | 14.51 | 12.49 | 12.55 | 13.75 | 12.42 | 14.88 |
| Hot tear strength observation | poor | slightly improved | slightly improved | good | good | good | poor | poor |

| | | | | | | | | |
|---|---|---|---|---|---|---|---|---|
| *Comparative | | | | | | | | |

As can be appreciated by reference to Tables II and III, the combination of polymer polyol and aliphatic polyhydroxy alcohol cross-linker offers the best processing characteristics in terms of hot tear and the best tear resistance of the cured foam. This combination also results in comparable or improved elongation as compared to foams made with cross-linkers without the addition of polymer polyol.

The polyurethane foams of the present invention may find use in numerous applications where environmental concerns are heightened, where a percentage of renewable resource content is required, and/or where increased tear strength is desired.

The foregoing examples of the present invention are offered for the purpose of illustration and not limitation.

## Claims

1. A polyurethane foam comprising the reaction product of:
at least one polyisocyanate; with
a polyol component comprising,
a polymer polyol (PMPO),
at least about 25 wt.%, based on the weight of the polyol component, of a vegetable oil hydroxylate, and
about 0 to about 3 wt.%, based on the weight of the polyol component, of an aliphatic polyhydroxy alcohol having a functionality of from about 3 to about 8 and a molecular weight of less than about 350,
optionally, a non-vegetable oil based polyol,
optionally in the presence of at least one of blowing agents, surfactants, other cross-linking agents, extending agents, pigments, flame retardants, catalysts and fillers.

2. The polyurethane foam according to Claim 1, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), polymeric diphenylmethane diisocyanate (PMDI), naphthylene-1,5-diisocyanate, triphenylmethane-4,4',4"-triisocyanate, pofyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret containing polyisocyanates, isocyanate-terminated prepolymers and mixtures thereof.

3. The polyurethane foam according to Claim 1, wherein the at least one polyisocyanate is polymeric diphenylmethane diisocyanate (PMDI).

4. The polyurethane foam according to Claim 1, wherein the vegetable oil is chosen from sunflower oil, canola oil, linseed oil, cottonseed oil, tung oil, palm oil, poppy seed oil, corn oil, peanut oil and soybean oil.

5. The polyurethane foam according to Claim 1, wherein the vegetable oil is soybean oil.

6. The polyurethane foam according to Claim 1, wherein the polymer polyol is a styrene-acrylonitrile (SAN) polymer polyol.

7. The polyurethane foam according to Claim 1, wherein the polymer polyol is a polymer polyol prepared by the *in situ* polymerization of an isocyanate mixture with a diamine and/or hydrazine in a polyol (PHD polymer polyol) or prepared by the *in situ* polymerization of an isocyanate mixture with a glycol and/or glycol amine in a polyol (PIPA polymer polyol).

8. The polyurethane foam according to Claim 1, wherein the aliphatic polyhydroxy alcohol comprises from about 0.1 to about 3 wt.%, based on the weight of the polyol component.

9. The polyurethane foam according to Claim 1, wherein the aliphatic polyhydroxy alcohol is derived from a non-petroleum natural resource.

10. The polyurethane foam according to Claim 1, wherein the aliphatic polyhydroxy alcohol is chosen from glycerin, trimethylolpropane, trimethylolethane, pentaerythritol, alkylglucosides, sorbitol, mannitol, fructose, glucose, sucrose, hydroxyethylglucoside and hydroxypropyl glucoside.

11. The polyurethane foam according to Claim 1, wherein the aliphatic polyhydroxy alcohol is glycerin.

12. The polyurethane foam according to Claim 1, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

13. The polyurethane foam according to Claim 1, wherein the non-vegetable oil-based polyol is a polyether polyol.

14. The polyurethane foam according to Claim 1 having a density of less than about 160 kg/m³ (10 lb/ft³).

15. A process for producing a polyurethane foam comprising reacting:
at least one polyisocyanate; with
a polyol component comprising,
a polymer polyol (PMPO),
at least about 25 wt.%. based on the weight of the polyol component, of a vegetable oil hydroxylate, and
about 0 to about 3 wt.%, based on the weight of the polyol component, of an aliphatic polyhydroxy alcohol having a functionality of from about 3 to about 8 and a molecular weight of less than about 350,
optionally, a non-vegetable oil based polyol,
optionally in the presence of at least one of blowing agents, other cross-linking agents, extending agents, surfactants, pigments, flame retardants, catalysts and fillers.

16. The process according to Claim 15, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated. MDI, or HMDI), 1,3- and 1,4-phenylene diisocyanate, 2,4- and 2,6-toluene diisocyanate (TDI), diphenylmethane-2,4'- and/or -4,4'-diisocyanate (MDI), polymeric diphenylmethane diisocyanate (PMDI), naphthylene-1,5-diisocyanate, triphenylmethane-4,4',4"-triisocyanate, polyphenyl-polymethylene-polyisocyanates (crude MDI), norbornane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret containing polyisocyanates, isocyanate-terminated prepolymers and mixtures thereof.

17. The process according to Claim 15, wherein the at least one polyisocyanate is polymeric diphenylmethane diisocyanate (PMDI).

18. The process according to Claim 15, wherein the vegetable oil is chosen from sunflower oil, canola oil, linseed oil, cottonseed oil, tung oil, palm oil, poppy seed oil, corn oil, peanut oil and soybean oil.

19. The process according to Claim 15, wherein the vegetable oil is soybean oil.

20. The process according to Claim 15, wherein the polymer polyol is a styrene-acrylonitrile (SAN) polymer polyol.

21. The process according to Claim 15, wherein the polymer polyol is a PHD or PIPA polymer polyol.

22. The process according to Claim 15, wherein the aliphatic polyhydroxy alcohol comprises from about 0.1 to about 3 wt.%, based on the weight of the polyol component.

23. The process according to Claim 15, wherein the aliphatic polyhydroxy alcohol is derived from a non-petroleum natural resource.

24. The process according to Claim 15, wherein the aliphatic polyhydroxy alcohol is chosen from glycerin, trimethylolpropane, trimethylolethane, pentaerythritol, alkylglucosides, sorbitol, mannitol, fructose, glucose, sucrose, hydroxyethylglucoside and hydroxypropyl glucoside.

25. The process according to Claim 15, wherein the aliphatic polyhydroxy alcohol is glycerin.

26. The process according to Claim 15, wherein the non-vegetable oil-based polyol is chosen from polyethers, polyesters, polyacetals, polycarbonates, polyesterethers, polyester carbonates, polythioethers, polyamides, polyesteramides, polysiloxanes, polybutadienes and polyacetones.

27. The process according to Claim 15, wherein the non-vegetable oil-based polyol is a polyether polyol.

28. The polyurethane foam made by the process according to Claim 15.

29. The polyurethane foam according to Claim 28 having a density of less than about 160 kg/m³ (10 lb/ft³).

## Patentansprüche

1. Polyurethanschaum, umfassend das Reaktionsprodukt aus:
mindestens einem Polyisocyanat mit
einer Polyolkomponente, umfassend
ein Polymerpolyol (PMPO),
mindestens ca. 25 Gew.%, bezogen auf das Gewicht der Polyolkomponente, Pflanzenölhydroxylat und
ca. 0 bis ca. 3 Gew.%, bezogen auf das Gewicht der Polyolkomponente, aliphatischen Polyhydroxyalkohol mit einer Funktionalität von ca. 3 bis ca. 8 und einem Molekulargewicht von weniger als ca. 350,
gegebenenfalls ein nicht auf Pflanzenöl bezogenes Polyol,
gegebenenfalls in der Gegenwart mindestens eines Mittels aus Blähmitteln, oberflächenaktiven Mitteln, weiteren Vernetzungsmitteln, Verlängerungsmitteln, Pigmenten, Flammhemmern, Katalysatoren und aus Füllstoffen.

2. Polyurethanschaum gemäß Anspruch 1, worin das mindestens eine Polyisocyanat ausgewählt ist aus Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat, 1-Isocyanato-3,3,5-trimethyl-5-isocyanatomethylcyclohexan (Isophorondiisocyanat), 2,4- und 2,6-Hexahydrotoluoldiisocyanat, Dicyclohexylmethan-4,4'-diisocyanat (hydriertem MDI oder HMDI), 1,3- und 1,4-Phenylendiisocyanat, 2,4- und 2,6-Toluoldiisocyanat (TDI), Diphenylmethan-2,4'- und/oder - 4,4'-diisocyanat (MDI), polymerem Diphenylmethandiisocyanat (PMDI), Naphthalin-1,5-diisocyanat, Triphenylmethan-4,4',4"-triisocyanat, Polyphenylpolymethylenpolyisocyanaten (rohem MDI), Norbornandiisocyanate, m- und p-Isocyanatophenylsulfonylisocyanaten, perchlorierten Arylpolyisocyanaten, Carbodiimidmodifizierten Polyisocyanaten, Urethan-modifizierten Polyisocyanaten, Allophanat-modifizierten Polyisocyanaten, Isocyanurat-modifizierten Polyisocyanaten, Harnstoffmodifizierten Polyisocyanaten, Biuret enthaltenden Polyisocyanaten, Isocyanat-terminierten Prepolymeren und aus Mischungen davon.

3. Polyurethanschaum gemäß Anspruch 1, worin das mindestens eine Polyisocyanat polymeres Diphenylmethandiisocyanat (PMDI) ist.

4. Polyurethanschaum gemäß Anspruch 1, worin das Pflanzenöl ausgewählt ist aus Sonnenblumen-, Raps- (Canola-), Leinsamen--, Baumwollsamen-, Tung-, Palm-, Mohnsamen-, Mais-, Erdnuss- und aus Sojabohnenöl.

5. Polyurethanschaum gemäß Anspruch 1, worin das Pflanzenöl Sojabohnenöl ist.

6. Polyurethanschaum gemäß Anspruch 1, worin das Polymerpolyol ein Styrol-Acrylnitril(SAN)-Polymerpolyol ist.

7. Polyurethanschaum gemäß Anspruch 1, worin das Polymerpolyol ein Polymerpolyol ist, hergestellt durch die in-situ-Polymerisation einer Isocyanatmischung mit Diamin und/oder Hydrazin in einem Polyol (PHD-Polymerpolyol) oder hergestellt durch die in situ-Polymerisation einer Isocyanatmischung mit einem Glycol und/oder Glycolamin in einem Polyol (PIPA-Polymerpolyol).

8. Polyurethanschaum gemäß Anspruch 1, worin der aliphatische Polyhydroxyalkohol ca. 0,1 bis ca. 3 Gew.% umfasst, bezogen auf das Gewicht der Polyolkomponente.

9. Polyurethanschaum gemäß Anspruch 1, worin der aliphatische Polyhydroxyalkohol aus einer Nicht-Petrol-Naturquelle abgeleitet ist.

10. Polyurethanschaum gemäß Anspruch 1, worin der aliphatische Polyhydroxyalkohol ausgewählt ist aus Glycerin, Trimethylolpropan, Trimethylolethan, Pentaerythrit, Alkylglucosiden, Sorbit, Mannit, Fructose, Glucose, Sucrose, Hydroxyethylglucosid und aus Hydroxypropylglucosid.

11. Polyurethanschaum gemäß Anspruch 1, worin der aliphatische Polyhydroxyalkohol Glycerin ist.

12. Polyurethanschaum gemäß Anspruch 1, worin das nicht auf Pflanzenöl bezogene Polyol ausgewählt ist aus Polyethern, Polyestern, Polyacetalen, Polycarbonaten, Polyesterethern, Polyestercarbonaten, Polythioethern, Polyamiden, Polyesteramiden, Polysiloxanen, Polybutadienen und aus Polyacetonen.

13. Polyurethanschaum gemäß Anspruch 1, worin das nicht auf Pflanzenöl bezogene Polyol ein Polyetherpolyol ist.

14. Polyurethanschaum gemäß Anspruch 1 mit einer Dichte von weniger als ca. 160 kg/m³ (10 lb/ft³).

15. Verfahren zur Herstellung eines Polyurethanschaums, umfassend die Reaktion:
mindestens eines Polyisocyanats mit
einer Polyolkomponente, umfassend
ein Polymerpolyol (PMPO),
mindestens ca. 25 Gew.%, bezogen auf das Gewicht der Polyolkomponente, Pflanzenölhydroxylat und
ca. 0 bis ca. 3 Gew.%, bezogen auf das Gewicht der Polyolkomponente, aliphatischen Polyhydroxyalkohol mit einer Funktionalität von ca. 3 bis ca. 8 und einem Molekulargewicht von weniger als ca. 350,
gegebenenfalls ein nicht auf Pflanzenöl bezogenes Polyol,
gegebenenfalls in der Gegenwart mindestens eines Mittels aus Blähmitteln, oberflächenaktiven Mitteln, weiteren Vernetzungsmitteln, Verlängerungsmitteln, Pigmenten, Flammhemmern, Katalysatoren und aus Füllstoffen.

16. Verfahren gemäß Anspruch 15, worin das mindestens eine Polyisocyanat ausgewählt ist aus Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat, 1-Isocyanato-3,3,5-trimethyl-5-isocyanatomethylcyclohexan (Isophorondiisocyanat), 2,4- und 2,6-Hexahydrotoluoldiisocyanat, Dicyclohexylmethan-4,4'-diisocyanat (hydriertem MDI oder HMDI), 1,3- und 1,4-Phenylendiisocyanat, 2,4- und 2,6-Toluoldiisocyanat (TDI), Diphenylmethan-2,4'- und/oder - 4,4'-diisocyanat (MDI), polymerem Diphenylmethandiisocyanat (PMDI), Naphthalin-1,5-diisocyanat, Triphenylmethan-4,4',4"-triisocyanat, Polyphenylpolymethylenpolyisocyanaten (rohem MDI), Norbornandiisocyanate, m- und p-Isocyanatophenylsulfonylisocyanaten, perchlorierten Arylpolyisocyanaten, Carbodiimidmodifizierten Polyisocyanaten, Urethan-modifizierten Polyisocyanaten, Allophanat-modifizierten Polyisocyanaten, Isocyanurat-modifizierten Polyisocyanaten, Harnstoffmodifizierten Polyisocyanaten, Biuret enthaltenden Polyisocyanaten, Isocyanat-terminierten Prepolymeren und aus Mischungen davon.

17. Verfahren gemäß Anspruch 15, worin das mindestens eine Polyisocyanat polymeres Diphenylmethandiisocyanat (PMDI) ist.

18. Verfahren gemäß Anspruch 15, worin das Pflanzenöl ausgewählt ist aus Sonnenblumen-, Raps- (Canola-), Leinsamen-, Baumwollsamen-, Tung-, Palm-, Mohnsamen-, Mais-, Erdnuss- und aus Sojabohnenöl.

19. Verfahren gemäß Anspruch 15, worin das Pflanzenöl Sojabohnenöl ist.

20. Verfahren gemäß Anspruch 15, worin das Polymerpolyol ein Styrol-Acrylnitril(SAN)-Polymerpolyol ist.

21. Verfahren gemäß Anspruch 15, worin das Polymerpolyol PHD- oder PIPA-Polymerpolyol ist.

22. Verfahren gemäß Anspruch 15, worin der aliphatische Polyhydroxyalkohol ca. 0,1 bis ca. 3 Gew.% umfasst, bezogen auf das Gewicht der Polyolkomponente.

23. Verfahren gemäß Anspruch 15, worin der aliphatische Polyhydroxyalkohol aus einer Nicht-Petrol-Naturquelle abgeleitet ist.

24. Verfahren gemäß Anspruch 15, worin der aliphatische Polyhydroxyalkohol ausgewählt ist aus Glycerin, Trimethylolpropan, Trimethylolethan, Pentaerythrit, Alkylglucosiden, Sorbit, Mannit, Fructose, Glucose, Sucrose, Hydroxyethylglucosid und aus Hydroxypropylglucosid.

25. Verfahren gemäß Anspruch 15, worin der aliphatische Polyhydroxyalkohol Glycerin ist.

26. Verfahren gemäß Anspruch 15, worin das nicht auf Pflanzenöl bezogene Polyol ausgewählt ist aus Polyethern, Polyestern, Polyacetalen, Polycarbonaten, Polyesterethern, Polyestercarbonaten, Polythioethern, Polyamiden, Polyesteramiden, Polysiloxanen, Polybutadienen und aus Polyacetonen.

27. Verfahren gemäß Anspruch 15, worin das nicht auf Pflanzenöl bezogene Polyol ein Polyetherpolyol ist.

28. Polyurethanschaum, hergestellt mit dem Verfahren gemäß Anspruch 15.

29. Polyurethanschaum gemäß Anspruch 28 mit einer Dichte von weniger als ca. 160 kg/m³ (10 Ib/ft³).

## Revendications

1. Mousse de polyuréthane comprenant le produit de réaction de :
au moins un polyisocyanate ; avec
un constituant polyol comprenant,
un polyol polymère (PMPO),
au moins environ 25 % en poids, rapporté au poids du constituant polyol, d'un hydroxylate d'huile végétale, et
d'environ 0 à environ 3 % en poids, rapporté au poids du constituant polyol, d'un polyhydroxy alcool aliphatique ayant une fonctionnalité d'environ 3 à environ 8 et un poids moléculaire inférieur à environ 350,
facultativement, un polyol à base d'huile non végétale, facultativement en présence d'au moins un parmi des agents gonflants, des tensioactifs, d'autres agents de réticulation, des agents diluants, des pigments, des agents ignifuges, des catalyseurs et des charges.

2. Mousse de polyuréthane selon la revendication 1, dans laquelle le au moins un polyisocyanate est choisi parmi le diisocyanate d'éthylène, le diisocyanate de 1,4-tétraméthylène, le diisocyanate de 1,6-hexaméthylène, le diisocyanate de 1,12-dodécane, le 1,3-diisocyanate de cyclobutane, le 1,3- et 1,4-diisocyanate de cyclohexane, le 1-isocyanato-3,3,5-triméthyl-5-isocyanatométhylcyclohexane (diisocyanate d'isophorone), le diisocyanate de 2,4- et 2,6-hexahydrotoluène, le 4,4'-diisocyanate de dicyclohexylméthane (MDI hydrogéné, ou HMDI), le diisocyanate de 1,3- et 1,4-phénylène, le diisocyanate de 2,4- et 2,6-toluène (TDI), le 2,4'-et/ou 4,4'-düsocyanate de diphénylméthane (MDI), le diisocyanate de diphénylméthane polymère (PMDI), le 1,5-diisocyanate de naphtylène, le 4,4',4"-triisocyanate de triphénylméthane, les polyphényl-polyméthylène-polyisocyanates (MDI brut), les diisocyanates de norbornane, les sulfonylisocyanates de m- et p-isocyanatophényle, les aryles polyisocyanates perchlorés, les polyisocyanates carbodiimide-modifiés, les polyisocyanates uréthane-modifiés, les polyisocyanates allophanate-modifiés, les polyisocyanates isocyanurate-modifiés, les polyisocyanates urée-modifiés, les polyisocyanates contenant du biuret, les prépolymères isocyanate-terminés et des mélanges de ceux-ci.

3. Mousse de polyuréthane selon la revendication 1, dans laquelle au moins un polyisocyanate est le diisocyanate de diphénylméthane polymère (PMDI).

4. Mousse de polyuréthane selon la revendication 1, dans laquelle l'huile végétale est choisie parmi l'huile de tournesol, l'huile de canola, l'huile de lin, l'huile de coton, l'huile d'abrasin, l'huile de palme, l'huile de pavot, l'huile de maïs, l'huile d'arachide et l'huile de soja.

5. Mousse de polyuréthane selon la revendication 1, dans laquelle l'huile végétale est l'huile de soja.

6. Mousse de polyuréthane selon la revendication 1, dans laquelle le polyol polymère est un polyol polymère de styrène-acrylonitrile (SAN).

7. Mousse de polyuréthane selon la revendication 1, dans laquelle le polyol polymère est un polyol polymère préparé par la polymérisation *in situ* d'un mélange d'isocyanates avec une diamine et/ou une hydrazine dans un polyol (polyol polymère PHD) ou préparé par la polymérisation *in situ* d'un mélange d'isocyanates avec un glycol et/ou une glycolamine dans un polyol (polyol polymère PIPA).

8. Mousse de polyuréthane selon la revendication 1, dans laquelle le polyhydroxy alcool aliphatique compte pour d'environ 0,1 à environ 3 % en poids rapporté au poids du constituant polyol.

9. Mousse de polyuréthane selon la revendication 1, dans laquelle le polyhydroxy alcool aliphatique est dérivé d'une ressource naturelle de non-pétrole.

10. Mousse de polyuréthane selon la revendication 1, dans laquelle le polyhydroxy alcool aliphatique est choisi parmi la glycérine, le triméthylolpropane, le triméthyloléthane, le pentaérythritol, les alkylglucosides, le sorbitol, le mannitol, le fructose, le glucose, le sucrose, l'hydroxyéthylglucoside et l'hydroxypropylglucoside.

11. Mousse de polyuréthane selon la revendication 1, dans laquelle le polyhydroxy alcool aliphatique est la glycérine.

12. Mousse de polyuréthane selon la revendication 1, dans laquelle le polyol à base d'huile non-végétale est choisi parmi des polyéthers, des polyesters, des polyacétals, des polycarbonates, des polyesteréthers, des polyesters carbonates, des polythioéthers, des polyamides, des polyesteramides, des polysiloxanes, des polybutadiènes et des polyacétones.

13. Mousse de polyuréthane selon la revendication 1, dans laquelle le polyol à base d'huile non végétale est un polyétherpolyol.

14. Mousse de polyuréthane selon la revendication 1 ayant une densité inférieure à environ 60 kg/m³ (10 livres/pieds³).

15. Procédé de production d'une mousse de polyuréthane comprenant la réaction :
d'au moins un polyisocyanate ; avec
un constituant polyol comprenant,
un polyol polymère (PMPO),
au moins environ 25 % en poids, rapporté au poids du constituant polyol, d'un hydroxylate d'huile végétale, et
d'environ 0 à environ 3 % en poids, rapporté au poids du constituant polyol, d'un polyhydroxy alcool aliphatique ayant une fonctionnalité d'environ 3 à environ 8 et un poids moléculaire inférieur à environ 350,
facultativement, un polyol à base d'huile non végétale,
facultativement en présence d'au moins un parmi des agents gonflants, d'autres agents de réticulation, des agents de dilution, des tensioactifs, des pigments, des agents ignifuges, des catalyseurs et des charges.

16. Procédé selon la revendication 15, dans lequel au moins un polyisocyanate est choisi parmi le diisocyanate d'éthylène, le diisocyanate de 1,4-tétraméthylène, le diisocyanate de 1,6-hexaméthylène, le diisocyanate de 1,12-dodécane, le 1,3-diisocyanate de cyclobutane, le 1,3 et 1,4-diisocyanate de cyclohexane, le 1-isocyanato-3,3,5-triméthyl-5-isocyanatométhylcyclohexane (diisocyanate d'isophorone), le diisocyanate de 2,4- et 2,6-hexahydrotoluène, le 4,4'-diisocyanate de dicyclohexylméthane (MDI hydrogéné ou HMDI), le diisocyanate de 1,3- et 1,4-phénylène, le diisocyanate de 2,4- et 2,6-toluène (TDI), le 2,4'- et/ou 4,4'-düsocyanate de diphénylméthane (MDI), le diisocyanate de diphénylméthane polymère (PMDI), le 1,5-diisocyanate de naphtylène, le 4,4',4"-triisocyanate de triphénylméthane, les polyphényl-polyméthylène-polyisocyanates (MDI brut), les diisocyanates de norbornane, les sulfonylisocyanates de m- et p-isocyanatophényle, les aryles polyisocyanates perchlorés, les polyisocyanates carbodiimide-modifiés, les polyisocyanates uréthane-modifiés, les polyisocyanates allophanate-modifiés, les polyisocyanates isocyanurate-modifiés, les polyisocyanates urée-modifiés, les polyisocyanates contenant du biuret, les prépolymères isocyanate-terminés et des mélanges de ceux-ci.

17. Procédé selon la revendication 15, dans lequel au moins un polyisocyanate est le diisocyanate de diphénylméthane polymère (PMDI).

18. Procédé selon la revendication 15, dans lequel l'huile végétale est choisie parmi l'huile de tournesol, l'huile de canola, l'huile de lin, l'huile de coton, l'huile d'abrasin, l'huile de palme, l'huile de pavot, l'huile de maïs, l'huile d'arachide et l'huile de soja.

19. Procédé selon la revendication 15, dans lequel l'huile végétale est l'huile de soja.

20. Procédé selon la revendication 15, dans lequel le polyol polymère est un polyol polymère de styrène-acrylonitrile (SAN).

21. Procédé selon la revendication 15, dans lequel le polyol polymère est un polyol polymère de PHD ou de PIPA.

22. Procédé selon la revendication 15, dans lequel le polyhydroxy alcool aliphatique compte pour d'environ 0,1 à environ 3 % en poids rapporté au poids du constituant polyol.

23. Procédé selon la revendication 15, dans lequel le polyhydroxy alcool aliphatique est dérivé d'une ressource naturelle de non-pétrole.

24. Procédé selon la revendication 15, dans lequel le polyhydroxy alcool aliphatique est choisi parmi la glycérine, le triméthylolpropane, le triméthyloléthane, le pentaérythritol, les alkylglucosides, le sorbitol, le mannitol, le fructose, le glucose, le saccharose, l'hydroxyéthylglucoside et l'hydroxypropylglucoside.

25. Procédé selon la revendication 15, dans lequel le polyhydroxy alcool aliphatique est la glycérine.

26. Procédé selon la revendication 15, dans lequel le polyol à base d'huile non végétale est choisi parmi des polyéthers, des polyesters, des polyacétals, des polycarbonates, des polyesteréthers, des polyestercarbonates, des polythioéthers, des polyamides, des polyesteramides, des polysiloxanes, des polybutadiènes et des polyacétones.

27. Procédé selon la revendication 15, dans lequel le polyol à base d'huile non végétale est un polyétherpolyol.

28. Mousse de polyuréthane fabriquée par le procédé selon la revendication 15.

29. Mousse de polyuréthane selon la revendication 28 ayant une densité inférieure à environ 160 kg/m³ (10 livres/pieds³).
